# EUROPÄISCHE PATENTSCHRIFT

(11) **EP 3 033 369 B1**
(45) Veröffentlichungstag und Bekanntmachung des Hinweises auf die Patenterteilung: **18.07.2018**
(21) Anmeldenummer: 14749832.3
(22) Anmeldetag: 08.08.2014
(51) Int. Cl.: C08G 18/76, C08G 18/36, C08G 18/32, C08G 18/48, C08G 18/66, C08J 9/14, C08G 18/50, C08G 101/00

(54) **POLYURETHANSCHAUMSTOFFE UND IHRE VERWENDUNG**
POLYURETHANE FOAMS AND THEIR UTILISATION
MOUSSES DE POLYURÉTHANE ET LEUR UTILISATION

(30) Priorität: 13.08.2013 EP 13180161
(43) Veröffentlichungstag der Anmeldung: 22.06.2016
(73) Patentinhaber: Covestro Deutschland AG, 51373 Leverkusen (DE)
(72) Erfinder: EISEN, Norbert, 50999 Köln (DE); SCHLECHT, Sebastian, 40721 Hilden (DE); ORYWOL, Peter, 53797 Lohmar (DE); GANSEN, Günter, 41472 Neuss (DE)
(74) Vertreter: Levpat
(86) Internationale Anmeldenummer: PCT/EP2014/067099
(87) Internationale Veröffentlichungsnummer: WO 2015/022273

(56) Entgegenhaltungen:
- EP-A1- 1 760 244
- WO-A1-2010/046326
- DE-A1- 4 418 993
- US-A1- 2012 263 931

## Beschreibung

Die vorliegende Erfindung betrifft Polyurethan-Schaumstoffe und deren Verwendung bei der Ausschäumung von Profilen, insbesondere Aluminiumprofilen zur Verbesserung der Wärmedämmeigenschaften der besagten Profile.

In den Patenten EP 1347141 A1 und EP 1760244 A1 ist beschrieben, dass zur Verbesserung der Wärmedämmung von Aluminiumprofilen unter anderem Polyurethan-Schaumstoffe verwendet werden. Oft werden diese ausgeschäumten Aluminiumprofile nachträglich lackiert. Dafür kommt in der Regel ein Pulverlackierverfahren mit Temperaturen von z.B. 180 °C bis 210 °C zum Einsatz. Um einen geringen U_{F}-Wert des Aluminiumprofils zu erreichen, verwendet man einen Polyurethan Schaum, der durch das physikalische Treibmittel Fluorkohlenwasserstoff (wie z.B. HFC 365mfc (1,1,1,3,3-pentafluorbutan), HFC 227ea (1,1,1,2,3,3,3-Heptafluorpropan) getrieben wird. Der U_{F}-Wert ist hierbei eine Abwandlung des allgemeinen U-Wertes und bezieht sich auf ein Rahmenprofil (Der Index F steht dabei für Rahmen (english frame)). Der U-Wert ist definiert als Wärmedurchgangskoeffizient. Er ist ein spezifischer Kennwert eines Bauteils/Stoffes und wird vorwiegend im Bauwesen verwendet. Allgemein gilt: Je höher der Wärmedurchgangskoeffizient U ist, desto schlechter ist die Wärmedämmeigenschaft dieses Stoffes. Zur Optimierung der Wärmedämmung des Bauteils ist es daher zielführend, einen möglichst geringen U bzw. U_{F}-Wert zu erreichen. Der oben beschriebene Polyurethan-Schaum mit Fluorkohlenwasserstoffen als Treibmittel hat eine sehr feine Zellstruktur mit sehr guten Isolationseigenschaften. Nachteil dieser Treibmittel ist, dass sie einen starken negativen Einfluss auf die Erderwärmung haben ("Global Warming Potential").

Alternativ könnte man einen Polyurethanschaum verwenden, der durch Kohlendioxid, welches bei der Reaktion von Wasser mit Isocyanat entsteht, getrieben ist. Der Nachteil des negativen Einflusses auf die Erderwärmung könnte dadurch vermieden werden. Allerdings ist bekannt, dass Polyurethan-Schäume, die mit CO₂-getrieben sind, im Vergleich zu Schäumen, die als Treibmittel Fluorkohlenwasserstoffe oder Kohlenwasserstoffe (z. B. Pentan) enthalten, deutlich schlechtere Wärmeleitzahlen aufweisen. Dies bedeutet, dass für den gleichen U_{F}-Wert eines Aluminiumprofils, ein CO₂-getriebener Polyurethan-Schaum deutlich dicker sein muss, als Polyurethanschaum, der z.B. mit Pentan getrieben ist. Da z.B. Aluminiumprofile für Fenster in ihrer Tiefe begrenzt sind, führt ein CO₂-getriebener Polyurethanschaum immer zu einem schlechteren U_{F}-Wert.

Aufgrund des geringen Erderwärmungspotentials und der hervorragenden Wärmeleiteigenschaften (sehr gute Isolationseigenschaften) von Kohlenwasserstoffen (wie z.B. Hexan, Pentan, Butan), würde die Verwendung von Kohlenwasserstoff getriebenen Polyurethanschäumen zum Ausschäumen von Aluminiumprofilen die optimale Lösung darstellen. Leider hat sich in der Praxis gezeigt, dass diese Art von Polyurethanschäumen beim Lackierprozess, bei Temperaturen größer 180 °C, entweder völlig zerstört werden, aufreißen oder sich so stark aufblähen, dass sie die Aluminiumprofile auseinander drücken. Das heißt, dass bisherige Polyurethanschäume, die durch Kohlenwasserstoffe getrieben sind, im Pulverlackierprozess (Temperaturen > 180 °C) nicht anwendbar sind.

Aufgabe war es daher, einen CO₂ bzw. CO₂/Kohlenwasserstoff (insbesondere Pentan) getriebenen Polyurethanschaumstoff einer Rohdichte von 60 bis 150 g/dm³ zur Verfügung zu stellen, der zum Ausschäumen von z.B. Aluminiumprofilen eingesetzt werden kann, der bei Temperaturen von 180 °C bis 210 °C temperaturstabil ist und der im Pulverlackierprozess bei 180 °C bis 210 °C bis zu 40 Minuten eingesetzt werden kann, ohne dass der Schaum zerstört wird, aufreißt oder sich zu stark aufbläht.

Diese Aufgabe konnte durch die nachfolgend näher beschriebenen CO₂ bzw. CO₂/Kohlenwasserstoff getriebenen Polyurethanschaumstoffe, die einen hohen Anteil Rizinusöl aufweisen, gelöst werden.

Gegenstand der vorliegenden Erfindung sind Polyurethanschaumstoffe mit einer Dichte gemäß DIN EN 845 von 60 g/dm³ bis 150 g/dm³ und einer Shore-A Härte gemäß DIN 53505 > 70 und einer Wärmestabilität (gemessen gemäß der Beschreibung auf Seite 7, Zeilen 10 bis 32) bei 180°C bis 210°C bis zu 40 Minuten, welche dadurch gekennzeichnet sind, dass sie erhältlich sind aus der Reaktion von Komponenten bestehend aus:
a) einer Isocyanatkomponente, bestehend aus
   i) bei Raumtemperatur flüssigen Di- und/oder Polyisocyanaten der Diphenylmethanreihe mit einem NCO-Gehalt von 28 Gew.-% bis 33,6 Gew.-%
b) einer Polyolkomponente bestehend aus
   i) ≥ 60 bis 80 Gew.-%, bevorzugt ≥ 65 bis 80 Gew.-%, bezogen auf die Polyolkomponente, Rizinusöl und/oder Derivaten des Rizinusöls
   ii) Diamin und/oder Polyamin gestarteten Alkylenoxiden mit Molekulargewichten (in g/mol) von 170 bis 4800, bevorzugt 200 bis 2000 und Funktionalitäten von 3 bis 8, bevorzugt 4 bis 6
   iii) gegebenenfalls einem oder mehreren Vernetzungsmitteln aus der Gruppe bestehend aus Alkoholen und Polyetherpolyolen jeweils mit Molekulargewichten (in g/mol) von 92 bis 3500, bevorzugt 300 bis 2000 und Funktionalitäten von 2 bis 8, bevorzugt 3 bis 6
   iv) Wasser
   v) gegebenenfalls Kohlenwasserstoffen als physikalische Treibmittel, insbesondere Pentan
   vi) Katalysatoren
   vii) Schaumstabilisatoren,
   viii) gegebenenfalls Hilfs - und/oder Zusatzmittel,
   wobei die Komponente a) und b) in einer Menge eingesetzt werden, dass die Kennzahl 90 bis 150, bevorzugt 100 bis 140, besonders bevorzugt 120 bis 130 beträgt.

Das Rizinusöl b)i) wird vorzugsweise in einer Menge von ≥ 65 bis 80 Gew.-%, besonders bevorzugt ≥ 70 bis 80 Gew.-%, bezogen auf die Polyolkomponente b), eingesetzt.

Die Komponenten b)ii) werden bevorzugt in einer Menge von 10 - 25 Gew.-%, bezogen auf die Polyolkomponente b), eingesetzt.
Die Vernetzungsmittel b)iii) werden, soweit vorhanden, vorzugsweise in einer Menge von 10-20 Gew.-%, bezogen auf die Polyolkomponte b), verwendet.
Die Treibmittel b)iv) und b)v) werden zusammen bevorzugt in Mengen von 1 bis 10 Gew.-%, bezogen auf die Polyolkomponente b), eingesetzt.
Vorzugsweise werden die Katalysatoren b)vi) in Mengen von 0,1 bis 3,0 Gew.-%, bezogen auf die Polyolkomponente b), verwendet.
Die Menge an Schaumstabilisatoren b)vii) liegt bevorzugt im Bereich von 1 bis 3 Gew.-%, bezogen auf die Polyolkomponente b).
Die Hilfs - und/oder Zusatzmittel b)viii) liegen vorzugsweise in Mengen von 0,5 bis 5 Gew.-%, bezogen auf die Polyolkomponente b), vor.

Die erfindungsgemäßen Polyurethanschaumstoffe haben gute Isoliereigenschaften und sind zum Ausschäumen von Aluminiumprofilen geeignet. Sie sind temperaturstabil (bis zu 40 Minutenbei 180 °C bis 210 °C), so dass sie bei der Pulverlackierung von Profilen eingesetzt werden können.

Die erfindungsgemäßen Polyurethanschaumstoffe werden daher vorzugsweise bei der Ausschäumung von Profilen, insbesondere Aluminiumprofilen zur Verbesserung der Wärmedämmeigenschaften der besagten Profile verwendet.

Überraschenderweise zeigte sich, dass Polyurethanschaumstoffe, die einen hohen Anteil an Rizinusöl enthalten, besonders gute Eigenschaften in der Temperaturstabilität aufweisen. Die besonders bevorzugten Pentan-getriebenen Polyurethanschaumstoffe zeigen eine außerordentlich hohe Temperaturstabilität und damit Eignung im Pulverlackierprozess. Cyclo-Pentan ist besonders bevorzugt.

Die erfindungsgemäßen Polyurethanschäume eignen sich insbesondere zum Ausschäumen von Fenster-, Tür- und Fassadenprofilen, insbesondere für Profile, die anschließend einer Pulverlackierung unterworfen werden.

Als Isocyanatkomponente a) werden bei Raumtemperatur sogenannte flüssige Di- und/oder Polyisocyanate der Diphenylmethanreihe eingesetzt. Hierzu gehören unter anderem bei Raumtemperatur flüssige und gegebenenfalls entsprechend modifizierte Gemische von 4,4'-Diisocyanatodiphenylmethan mit 2,4'- und gegebenenfalls 2,2'-Diisocyanatodiphenylmethan. Gut geeignet sind auch bei Raumtemperatur flüssige Polyisocyanatgemische der Diphenylmethanreihe, die neben den genannten Isomeren deren höhere Homologe enthalten und die in an sich bekannter Weise durch Phosgenierung von Anilin/Formaldehyd-Kondensaten zugänglich sind. Auch Urethan- und/oder Carbodiimidgruppen aufweisende Modifizierungsprodukte dieser Di- und/oder Polyisocyanate sind geeignet. Auch Allophanat- bzw. Biuretgruppen aufweisende Modifizierungsprodukte der genannten Di- und/oder Polyisocyanate sind geeignet. Die Isocyanatkomponente a) weist eine mittlere NCO-Funktionalität von 2,1 bis 5,0, vorzugsweise 2,5 bis 3,1 auf.

Als Rizinusöl bezeichnet man ein natürliches Pflanzenöl, das aus den Samen des tropischen Wunderbaumes gewonnen wird. Es ist ein Triglycerid aus Glycerin und verschiedenen Fettsäuren, hauptsächlich der Ricinolsäure. Unter Derivaten werden hierbei die aus dem Stand der Technik bekannten Stoffe verstanden, die durch Modifizierung der Öle erhältlich sind. Beispiele für Modifizierungen sind Umwandlungen an den Doppelbindungen, z.B. durch Hitzepolymerisation, Isomerisierung, Dehydratation bzw. Addition oder Substitution an den Doppelbindungen, oder Umwandlung des Glycerid-Systems, z.B. durch Umesterung.

Als Vernetzungsmittel b)iii) können insbesondere Alkohole (z.B. Glycerin) und/oder Polyetherpolyole eingesetzt werden. Dabei handelt es sich bevorzugt um Polyhydroxypolyether, welche auf an sich bekannte Weise durch Polyaddition von Alkylenoxiden an polyfunktionelle Starterverbindungen in Gegenwart von Katalysatoren hergestellt werden können. Bevorzugt werden die erfindungsgemäß eingesetzten Poly(oxyalkylen)polyole aus einer Starterverbindung mit durchschnittlich 2 bis 8 aktiven Wasserstoffatomen und einem oder mehreren Alkylenoxiden hergestellt. Besonders bevorzugte Starterverbindungen sind Moleküle mit drei bis sechs Hydroxylgruppen pro Molekül. Beispiele sind Triethanolamin, Glycerin, Trimethylolpropan, Pentaerythrit, Sorbit und Saccharose. Die Starterverbindungen können allein oder im Gemisch, unter anderem mit difunktionellen Starterverbindungen wie Diethylenglykol, Dipropylenglykol, Triethylenglykol, Tripropylenglykol, 1,4-Butandiol, 1,6-Hexandiol verwendet werden. Die erfindungsgemäß eingesetzten Polyetherpolyole werden aus einem oder mehreren Alkylenoxiden hergestellt. Bevorzugt verwendete Alkylenoxide sind Oxiran, Methyloxiran und Ethyloxiran. Diese können allein oder im Gemisch verwendet werden. Bei Verwendung im Gemisch ist es möglich, die Alkylenoxide statistisch oder blockweise oder beides nacheinander umzusetzen.

Des Weiteren werden als Vernetzer b)ii) Diamin und/oder Polyamin gestartete Polyether eingesetzt. Dies sind Additionsprodukte aus primäre und/oder sekundäre Aminogruppen aufweisenden aliphatischen oder aromatischen Di-oder Polyaminen mit Alkylenoxiden. Beispiele für solche Startmoleküle sind Toluylendiamin, Isophorondiamin und Ethylendiamin.

Als Treibmittel werden Wasser und gegebenenfalls Kohlenwasserstoffe, wie cyclo-Pentan, iso-Pentan, n-Pentan, Hexan, Butan oder Gemische daraus verwendet. Bevorzugt wird cyclo-Pentan, iso-Pentan und n-Pentan einzeln oder als Gemisch eingesetzt.

Erfindungsgemäß werden die in der Polyurethanchemie an sich üblichen Katalysatoren, wie z.B. tertiäre Amin oder Metallsalze in einer Menge von 0,1 bis 3 Gew.-%, bezogen auf die Summe der Polyolkomponente b), verwendet.

Neben den Schaumstabilisatoren b)vii) können weitere Hilfs- und/oder Zusatzstoffe b)viii) in einer Menge von 1 bis 3 Gew.-%, bezogen auf die Polyolkomponente b), eingesetzt werden.

Als weitere Hilfs- und/oder Zusatzstoffe b)viii) können gegebenenfalls Paraffine, Fettalkohole, Pigmente und/oder Farbstoffe, flammhemmende Substanzen, ferner Stabilisatoren gegen Alterungs- und Witterungseinflüsse, Weichmacher und fungistatisch und bakteriostatisch wirkende Substanzen, sowie Füllstoffe wie Bariumsulfat, Kieselgur, Ruß oder Schlämmkreide, Zellregler, Reaktionsverzögerer und weitere Stabilisatoren, wie z.B. Polysiloxane, eingesetzt werden. Einzelheiten über Verwendungs- und Wirkungsweise dieser Hilfs- und Zusatzmittel sind im Kunststoff-Handbuch, Band VII, herausgegeben von Vieweg und Höchtlen, Carl Hanser Verlag, München 1966, z.B. auf den Seiten 121 bis 205 beschrieben.

Zur Herstellung der Polyurethane werden die Isocyanatkomponente a) und die Polyolkomponente b) in solchen Mengen zur Umsetzung gebracht, dass das Verhältnis der Anzahl der NCO-Gruppen der Isocyanatkomponente a) zur Anzahl der reaktiven Wasserstoffatome in der Polyolkomponente b) 1 : 0,9 bis 1 : 1,5 (entsprechend einer Kennzahl (Verhältnis multipliziert mit 100) von 90 bis 150), vorzugsweise 1 : 1 bis 1 : 1,4 und besonders bevorzugt 1 : 1,2 bis 1 : 1,3 beträgt.

Die Ausgangskomponenten werden üblicherweise bei einer Temperatur von 15 bis 60 °C gemischt und zur Reaktion gebracht. Die Vermischung kann mit den üblichen Polyurethan-Verarbeitungsmaschinen erfolgen. In einer bevorzugten Ausführungsform erfolgt die Vermischung durch Niederdruckmaschinen oder Hochdruckmaschinen. Bei der Schaumherstellung kann die Verschäumung in einer offenen Form und Füllweise erfolgen. Sie kann aber auch in einer geschlossenen Form durchgeführt werden. Dabei wird das Reaktionsgemisch in eine Form z.B. aus Aluminium oder Kunststoff eingetragen. In der Form schäumt das schäumfähige Reaktionsgemisch auf und bildet den Formkörper. Selbstverständlich können auch Polyurethanschaumstoffe durch Blockverschäumung oder nach dem an sich bekannten Doppeltransportbandverfahren hergestellt werden.

Die Erfindung soll anhand der nachfolgenden Beispiele näher erläutert werden.

### Beispiele:

Die Herstellung der Polyurethanschaumstoffe erfolgte im Labormaßstab so, dass in einem Rührbecher aus Pappe die Isocyanatkomponente a) zusammen mit der Polyolkomponente b) und gegebenenfalls dem physikalischen Treibmittel vorgelegt wurden. Mittels eines Laborrührwerkes wurden die Komponenten bei 2000 Umdrehungen pro Minute (UpM) gemischt. Danach wurde die Mischung zum Ausschäumen in eine offene Form der Grundfläche 20 x 1 cm² gegeben. Nach dem Aufschäumen erhielt man einen feinzelligen Polyurethanschaumstoff.

Die genauen Zusammensetzungen und gemessenen Eigenschaften sind der Tabelle 1 zu entnehmen. Bei der Einwaage der Komponenten handelt es sich um Gewichtsteile (Tl).

Zur Bestimmung der Temperaturstabilität der erfindungsgemäßen Polyurethanschaumstoffe wurden U-Profile aus Polyamid oder Aluminium (Dimensionen (Breite x Länge x Höhe): 20 mm x 300 mm x 48 mm) an den Enden verschlossen, mit dem hergestellten Schaum in einer offenen Füllweise befüllt und in einem Heizschrank einer definierten Temperatur ausgesetzt. Es wurden U-Profile aus Polyamid bevorzugt, da diese die Temperaturen des Pulverlackiervorganges unverändert überstehen. Zur besseren Wärmedämmung wurden diese U-Profile aus Polyamid mit einem Polyurethanschaumstoff ausgeschäumt. Die Vorgehensweise sieht im Detail folgendermaßen aus: In das entsprechende U-Profil aus Polyamid wurden 33 g der Polyurethan Mischung (gegebenenfalls mit physikalischem Treibmittel) eingefüllt. Diese Mischung schäumte anschließend frei auf, so dass der obere Teil des Schaumkörpers über die seitlichen Begrenzungen des U-Profils senkrecht nach oben hinaus ragte (Höhe Schaumkörper ca. 80 mm). Hierbei war es wichtig, dass der Schaumkörper nicht über die seitliche Begrenzung kippte oder fiel. Nach mindestens 24 Stunden wurden von den hergestellten Schaumkörpern die Oberflächenhärte (Shore-A Härte) gemäß DIN 53505 und die Rohdichte gemäß dem Auftriebsverfahren, DIN ISO 1183-A-2004, (Prüfkörper 30 mm x 30 mm x 20 mm) bestimmt. Anschließend wurden die ausgeschäumten U-Profile mittig in einen Heizschrank (Heraeus T 5042K, Umluft, 200 °C, Dimensionen (B x H x T): 420 mm x 350 mm x 320 mm) für 20 Minuten gestellt. Durch die Temperaturbelastung veränderten die Polyurethanschaumstoffe ihre Farbe, was sowohl auf die mechanischen Eigenschaften als auch für die Wärmedämmeigenschaften keinen Einfluss hatte. Entscheidend für die Temperaturstabilität war, dass der Polyurethanschaumstoff durch die Temperaturbelastung nicht völlig zerstört wurde, nicht aufriss (Aufreißen bedeutet Risse > 2 cm.), nicht die Stabilität verlor (Stabilität bedeutet Änderung der Oberflächenhärte < 10 %) bzw. extrem aufblähte oder schrumpfte (Aufblähen oder Schrumpf bedeutet Änderung der Dichte > 10 %.).

Diese Aspekte sind wichtig, damit ein Polyurethanschaumstoff zur Dämmung von Aluminiumprofilen zum Beispiel für die Herstellung von Fensterprofilen eingesetzt werden kann. Wird ein Polyurethanschaumstoff durch die Temperaturbelastung zerstört oder schrumpft er stark, so verschlechtern sich die Wärmedämmeigenschaften und der Polyurethanschaumstoff ist nicht mehr als Isolierschaum einsetzbar. Bläht sich ein Polyurethanschaumstoff hingegen durch die Temperaturbelastung stark auf, so kann er das Polyamid U-Profil oder das Aluminiumprofil aufdrücken, wodurch die Maßhaltigkeit verloren geht.

Die Veränderung der Polyurethanschaumstoffe durch die Temperaturbelastung bei 200 °C für 20 Minuten ist in Tabelle 1 dargestellt.

**Tabelle 1: Zusammensetzungen und Eigenschaften der hergestellten Polyurethane**

| | **1** | **2** | **3** | **4** |
|---|---|---|---|---|
| | (erfindungsgemäß) | (nicht erfindungsgemäß) | (erfindungsgemäß) | (nicht erfindungsgemäß) |
| Polyolkomponente | 76,5 Tl Rizinusöl | 40 Tl Rizinusöl | 70 Tl Rizinusöl | 40 Tl Rizinusöl |
| | | 53,5 Tl Polyol B | 12 Tl Polyol A | 27 Tl Polyol A |
| | 17 Tl Polyol B | | 12 Tl Polyol B | 27 Tl Polyol B |
| | 2 Tl Wasser | 2 Tl Wasser | 1 Tl Wasser | 1 Tl Wasser |
| | 2 Tl Tegostab | 2 Tl Tegostab | 2,5 Tl Tegostab | 2,5 Tl Tegostab |
| | B8411 | B8411 | B8411 | B8411 |
| | 2,5 Tl Dabco | 2,5 Tl Dabco | 2,5 Tl Dabco | 2,5 Tl Dabco |
| | 33LV | 33LV | 33LV | 33LV |
| Physikalisches Treibmittel | - | - | 5 T1 Cyclo-Pentan | 7 T1 Cyclo-Pentan |
| Isocyanatkomponente | Desmodur® 44V20 | Desmodur® 44V20 | Desmodur® 44V20 | Desmodur® 44V20 |
| Isocyanat-Kennzahl | 130 | 130 | 120 | 130 |
| Dichte des Polyurethanschaumstoffs | 61 g/L | 84 g/L | 60 g/L | 62 g/L |
| Shore A Härte der Oberfläche (vor / nach Temperaturbelastung bei 200°C, 20 Min.) | 72 / 75 | 50 / 25 | 70 / 65 | 48 / 30 |
| Änderung Shore A Härte der Oberfläche (durch Temperaturbelastung bei 200°C, 20 Min.) | 4 % | 50 % | 7 % | 38 % |
| Blähen durch Temperaturbelastung bei 200°C, 20 Min. | Kein Aufblähen (leichter Schrumpf) | Starkes Aufblähen | Kein Aufblähen (leichter Schrumpf) | Starkes Aufblähen |
| Dichteunterschied durch Temperaturbelastung bei 200°C, 20 Min. | 7 % | 31 % | 7 % | 26 % |
| Rissbildung im Polyurethanschaumstoff (Risse > 2 cm)durchTemper aturbelastung bei 200°C, 20 Min. | Nein | Ja | Nein | Ja |
| Temperaturstabilität bei 200°C für 20 Min. | **Ja** | **Nein** | **Ja** | **Nein** |

| | | | | |
|---|---|---|---|---|
| Rizinusöl: technische Qualität, Hydroxylzahl ca. 160 mg KOH/g, Lieferant: Alberdink Boley, Krefeld. Polyol A: Sorbit, Wasser, Glycerin gestarteter Polyether mit einem Molekulargewicht von 575 g/mol, erhalten durch anionische Polyaddition an Propylenoxid. Polyol B: Ethylendiamin gestarteter Polyether mit einem Molekulargewicht von 275 g/mol, erhalten durch anionische Polyaddition an Propylenoxid. Tegostab B8411: Polyurethan-Schaumstabilisator (Polyether Polysiloxan), Hersteller: Goldschmidt AG, Essen. Dabco 33LV: tertiärer Aminkatalysator (1,4-Diazabicyclo[2.2.2]octan) in Lösung, Hersteller: Sigma-Aldrich. Desmodur® 44V20: Isocyanat auf Basis der Diphenylmethanreihe, Hersteller: Bayer MaterialScience AG, Leverkusen. | | | | |

Wie den Beispielen 1 bis 4 zu entnehmen ist, kann die geforderte Temperaturstabilität bei 200 °C für 20 Minuten nur erreicht werden, wenn sich ein hoher Anteil Rizinusöl (≥60 Gew.-%, besonders bevorzugt ≥ 65 Gew.-%, bezogen auf die Polyolkomponente b)) in der Polyolkomponente befindet. Sowohl der rein Wasser-getriebene (Beispiel 1), als auch der Wasser/Cyclo-Pentan-getriebene Polyurethanschaum (Beispiel 3) erfüllen die gewünschte Temperaturstabilität. In den Beispielen 2 und 4 ist nach einer Temperaturbelastung von 200°C für 20 Minuten ein deutlicher Abfall in der Shore-A Härte, ein starkes Aufblähen des Polyurethanschaumstoffes sowie eine starke Rissbildung in dem Polyurethanschaumstoff zu verzeichnen. Deshalb können diese Polyurethanschäume nicht als Isolierschäume in Rahmen, die einer entsprechenden Temperaturbehandlung unterworfen werden, eingesetzt werden.

## Patentansprüche

1. Polyurethanschaumstoffe mit einer Dichte gemäß DIN EN 845 von 60 g/dm³ bis 150 g/dm³ und einer Shore-A Härte gemäß DIN 53505 > 70 und einer Wärmestabilität (gemäß Seite 7, Zeilen 10 bis 32 der Beschreibung) bei 180°C bis 210°C bis zu 40 Minuten, **dadurch gekennzeichnet, dass** sie erhältlich sind aus der Reaktion von Komponenten bestehend aus
a) einer Isocyanatkomponente, bestehend aus
i) bei Raumtemperatur flüssigen Di- und/oder Polyisocyanaten der Diphenylmethanreihe mit einem NCO-Gehalt von 28 Gew.-% bis 33,6 Gew.-%
b) einer Polyolkomponente bestehend aus
i) ≥ 60 bis 80 Gew.-%, bevorzugt ≥ 65 bis 80 Gew.-%, bezogen auf die Polyolkomponente, Rizinusöl und/oder Derivaten des Rizinusöls
ii) Diamin und/oder Polyamin gestarteten Alkylenoxiden mit Molekulargewichten von 170 bis 4800 g/mol, bevorzugt 200 bis 2000 g/mol und Funktionalitäten von 3 bis 8, bevorzugt 4 bis 6
iii) gegebenenfalls einem oder mehreren Vernetzungsmitteln aus der Gruppe bestehend aus Alkoholen und Polyetherpolyolen jeweils mit Molekulargewichten von 92 bis 3500 g/mol, bevorzugt 300 bis 2000 g/mol und Funktionalitäten von 2 bis 8, bevorzugt 3 bis 6
iv) Wasser
v) gegebenenfalls Kohlenwasserstoffen als physikalische Treibmittel
vi) Katalysatoren
vii) Schaumstabilisatoren
viii) gegebenenfalls Hilfs - und/oder Zusatzmitteln,
wobei die Komponente a) und b) in einer Menge eingesetzt werden, dass die Kennzahl 90 bis 150, bevorzugt 100 bis 140, besonders bevorzugt 120 bis 130 beträgt.

2. Verwendung der Polyurethanschaumstoffe gemäß Anspruch 1 zum Ausschäumen von Fenster-, Tür- und Fassadenprofilen, insbesondere von Profilen, die anschließend einer Pulverlackierung unterworfen werden.

## Claims

1. Polyurethane foams of density from 60 g/dm³ to 150 g/dm³ in accordance with DIN EN 845 and with Shore A hardness > 70 in accordance with DIN 53505 and with heat resistance (in accordance with page 7, lines 10 to 32 of the German-language version of the Description) of up to 40 minutes at from 180°C to 210°C, **characterized in that** they are obtainable from the reaction of components composed of
a) an isocyanate component composed of
i) room-temperature-liquid di- and/or polyisocyanates of the diphenylmethane group with from 28% by weight to 33.6% by weight NCO content
b) a polyol component composed of
i) from ≥ 60 to 80% by weight, preferably from ≥ 65 to 80% by weight, based on the polyol component, of castor oil and/or derivatives of castor oil
ii) diamine and/or polyamine-started alkylene oxides with molar masses from 170 to 4800 g/mol, preferably from 200 to 2000 g/mol, and functionalities from 3 to 8, preferably from 4 to 6
iii) optionally one or more crosslinking agents from the group consisting of alcohols and polyether polyols respectively with molar masses from 92 to 3500 g/mol, preferably from 300 to 2000 g/mol, and functionalities from 2 to 8, preferably from 3 to 6
iv) water
v) optionally hydrocarbons as physical blowing agents
vi) catalysts
vii) foam stabilizers
viii) optionally auxiliaries and/or additives,
where the quantity used of component a) and b) is such that the index is from 90 to 150, preferably from 100 to 140, particularly preferably from 120 to 130.

2. Use of the polyurethane foams according to Claim 1 for the foam-filling of window profiles, door profiles, and facade profiles, in particular of profiles which are then subjected to a powder coating process.

## Revendications

1. Mousses de polyuréthane ayant une densité selon DIN EN 845 de 60 g/dm³ à 150 g/dm³ et une dureté Shore A selon DIN 53505 > 70, et une stabilité thermique (selon la page 7, lignes 10 à 32 de la description) à une température de 180 °C à 210 °C de jusqu'à 40 minutes, **caractérisées en ce qu'**elles peuvent être obtenues par la réaction de composants constitués par :
a) un composant isocyanate, constitué par :
i) des di- et/ou polyisocyanates liquides à température ambiante de la série du diphénylméthane ayant une teneur en NCO de 28 % en poids à 33,6 % en poids,
b) un composant polyol constitué par :
i) ≥ 60 à 80 % en poids, de préférence ≥ 65 à 80 % en poids, par rapport au composant polyol, d'huile de ricin et/ou de dérivés d'huile de ricin,
ii) des oxydes d'alkylène démarrés avec une diamine et/ou une polyamine ayant des poids moléculaires de 170 à 4 800 g/mol, de préférence de 200 à 2 000 g/mol, et des fonctionnalités de 3 à 8, de préférence de 4 à 6,
iii) éventuellement un ou plusieurs agents de réticulation du groupe constitué par les alcools et les polyéther-polyols ayant chacun des poids moléculaires de 92 à 3 500 g/mol, de préférence de 300 à 2 000 g/mol, et des fonctionnalités de 2 à 8, de préférence de 3 à 6,
iv) de l'eau,
v) éventuellement des hydrocarbures en tant qu'agents gonflants physiques,
vi) des catalyseurs,
vii) des stabilisateurs de mousse,
viii) éventuellement des adjuvants et/ou des additifs,
les composants a) et b) étant utilisés en une quantité telle que l'indice soit de 90 à 150, de préférence de 100 à 140, de manière particulièrement préférée de 120 à 130.

2. Utilisation de mousses de polyuréthane selon la revendication 1 pour le moussage de profilés de fenêtres, de portes et de façades, notamment de profilés qui sont ensuite soumis à un vernissage en poudre.
